# EUROPÄISCHE PATENTSCHRIFT

(11) **EP 2 217 812 B1**
(45) Veröffentlichungstag und Bekanntmachung des Hinweises auf die Patenterteilung: **12.10.2011**
(21) Anmeldenummer: 08748918.3
(22) Anmeldetag: 15.04.2008
(51) Int. Cl.: F15B 13/08, F16K 27/00

(54) **VENTILANORDNUNG UND DAMIT AUSGESTATTETE SCHALTSCHRANKANORDNUNG**
VALVE ARRANGEMENT, AND SWITCHGEAR CUBICLE ARRANGEMENT EQUIPPED THEREWITH
ENSEMBLE DE SOUPAPES ET SYSTEME D'ARMOIRE DE DISTRIBUTION EQUIPE DE CET ENSEMBLE

(43) Veröffentlichungstag der Anmeldung: 18.08.2010
(73) Patentinhaber: FESTO AG & Co. KG, 73734 Esslingen (DE)
(72) Erfinder: KÜHBAUCH, Heiko, 73257 Köngen (DE); BERNER, Michael, 73230 Kirchheim (DE)
(74) Vertreter: Abel, Martin
(86) Internationale Anmeldenummer: PCT/EP2008/002982
(87) Internationale Veröffentlichungsnummer: WO 2009/127224

(56) Entgegenhaltungen:
- EP-A- 0 338 338
- EP-B1- 0 678 676
- EP-B1- 1 120 574
- DE-C2- 19 711 227

## Beschreibung

Die Erfindung betrifft eine Ventilanordnung, mit mehreren zur Steuerung von Fluidströmen dienenden Ventileinheiten und mit einer sich aus mehreren in Richtung einer Hauptachse aneinander gesetzten Modulkörpern zusammensetzenden Modulbaugruppe, die außen eine sich aus Modulkörperflächen der nebeneinander liegenden Modulkörper zusammensetzende Grundfläche aufweist, an der mehrere in der Modulbaugruppe verlaufende, zum Anschließen von Fluidleitungen vorgesehene Fluidkanäle ausmünden.

Die Erfindung betrifft ferner eine Schaltschrankanordnung, die einen Schaltschrank aufweist, an dessen Schrankwand innen eine Ventilanordnung der oben genannten Art so montiert ist, dass ihre Grundfläche einer fensterartigen Durchbrechung der Schrankwand zugewandt ist.

Aus der EP 0 678 676 B1 ist eine Ventilanordnung der eingangs genannten Art bekannt, die aus einer sich aus mehreren aneinander gereihten Modulkörpern zusammensetzenden Modulbaugruppe besteht, deren Modulkörper, abgesehen von den Abschlusskörpern, unmittelbar als Ventileinheiten ausgebildet sind. Mit anderen Worten bildet die Modulbaugruppe eine Ventilbaugruppe, die mehrere zur Steuerung von Fluidströmen dienende Ventileinheiten aufweist, wobei an einer außen angeordneten Grundfläche Fluidkanäle ausmünden, die durch die Ventileinheiten steuerbar sind. Der modulare Aufbau ermöglicht eine flexible Zusammenstellung der Ventilbaugruppe und erleichtert Variationen in ihrer Funktionalität.

Der Anmelderin ist außerdem eine druckschriftlich nicht dokumentierbare Schaltschrankanordnung bekannt, die einen Schaltschrank aufweist, in dem eine Ventilanordnung der vorgenannten Art installiert ist. Um zu fluidischen Verbrauchern führende Fluidleitungen anschließen zu können, enthält die Schrankwand eine fensterartige Durchbrechung. Innen ist an die fensterartige Durchbrechung eine einstückige Tragplatte angebaut, die mit einer zur Abdichtung bezüglich der Schrankwand dienenden Dichtung ausgestattet ist. Auf diese Weise ist die fensterartige Durchbrechung verschlossen und ein Eindringen von Verunreinigungen in den Innenraum des Schaltschrankes verhindert. Die modulare Ventilbaugruppe ist an der dem Innenraum des Schaltschrankes zugewandten Fläche der Tragplatte montiert.

Aus der DE 197 11 227 C2 ist eine weitere Ventilanordnung der eingangs genannten Art bekannt, bei der die zum Anschließen von Fluidleitungen dienenden Fluidkanäle in einer bezüglich einer Ventilbaugruppe eigenständigen Modulbaugruppe ausgebildet sind, die als Ventilträger fungiert und mit der Ventilbaugruppe lösbar bestückbar ist. Eine solche Ventilanordnung eignet sich bisher mangels geeigneter Abdichtmaßnahmen nicht für die Montage in einem Schaltschrank.

Aus der EP 1 120 574 B1 ist eine Ventilanordnung bekannt, die über eine einstückige Tragplatte verfügt, welche mit Ventileinheiten bestückt ist. Jede einzelne Ventileinheit ist von einer Schutzhaube umgeben, die dichtend an der Tragplatte anliegt, um eine reinigungsfreundliche Oberfläche zu schaffen. Es ist die Aufgabe der vorliegenden Erfindung, Maßnahmen zu treffen, mit denen sich eine eine Modulbaugruppe aufweisende Ventilanordnung einfach und kostengünstig in abgedichteter Weise in einem Schaltschrank installieren lässt.

Zur Lösung dieser Aufgabe ist bei einer Ventilanordnung der eingangs genannten Art in der Grundfläche der Modulbaugruppe eine die dortigen Kanalmündungen der Fluidkanäle umrahmende, zur Aufnahme eines Dichtungselementes dienende Dichtungsaufnahmenut ausgebildet, die sich über mehrere Modulkörper hinweg erstreckt, wobei sie sich aus ineinander übergehenden, in aneinander angrenzenden Modulkörperflächen ausgebildeten Nut-Längenabschnitten zusammensetzt.

Die Erfindung wird ferner gelöst durch eine Schaltschrankanordnung mit einem Schaltschrank, dessen Schrankwand eine fensterartige Durchbrechung aufweist, wobei an der Innenfläche der Schrankwand mindestens eine Ventilanordnung des vorgenannten Aufbaus mit ihrer Grundfläche voraus derart montiert ist, dass die Dichtungsaufnahmenut die fensterartige Durchbrechung umschließt und ein in der Dichtungsaufnahmenut angeordnetes Dichtungselement um die fensterartige Durchbrechung herum an der Innenfläche der Schrankwand dichtend anliegt.

Auf diese Weise besteht die Möglichkeit, eine modular aufgebaute Ventilanordnung unmittelbar mit ihrer Modulbaugruppe an der Schrankwand eines Schaltschrankes abgedichtet zu montieren. Die zur Aufnahme eines zwischen den Modulkörpern und der Schrankwand abdichtenden Dichtungselementes dienende Dichtungsaufnahmenut ist direkt in der Grundfläche der Modulbaugruppe ausgebildet, so dass sie sich über mehrere der aneinander gereihten Modulkörper hinweg erstreckt und sich aus einzelnen, ineinander übergehenden Nut-Längenabschnitten zusammensetzt, die in den aneinander angrenzenden Modulkörperflächen ausgebildet sind. Somit erübrigt sich der Einsatz einer zusätzlichen einstückigen Tragplatte, die von Fall zu Fall, in Abhängigkeit von der Baugröße der Ventilanordnung, individuell bereitgestellt werden müsste. Da die Nut-Längenabschnitte in den Modulkörpern selbst ausgebildet sind, verlängert oder verkürzt sich die Dichtungsaufnahmenut in der Richtung der Hauptachse automatisch mit jedem Einsetzen oder Entnehmen eines Modulkörpers.

Die Dichtungsaufnahmenut eignet sich zur Aufnahme von sowohl rahmenförmig in sich geschlossenen Dichtungselementen als auch von strangförmigen, endlich langen Dichtungselementen, die man mit der gewünschten Länge individuell zuschneidet. Letzteres hat den Vorteil, dass der Aufwand zur Lagerhaltung von Dichtungselementen unterschiedlicher Abmessungen entfällt.

Vorteilhafte Weiterbildungen der Erfindung gehen aus den Unteransprüchen hervor.

Die Modulkörper können zumindest teilweise unmittelbar selbst von den Ventileinheiten gebildet sein. Es ist insbesondere möglich, die Modulbaugruppe in Gestalt einer Ventilbaugruppe zu realisieren, die mehrere in Richtung der Hauptachse aneinander gereihte Ventileinheiten aufweist, die als die Modulkörper fungieren.

Es ist auch eine Bauform möglich, bei der die Ventileinheiten an einem beispielsweise block- oder plattenförmigen, jedoch segmentierten Ventilträger montiert sind, wobei dieser segmentierte Ventilträger die Modulbaugruppe bildet und seine durch die Segmentierung erhaltenen Komponenten die Modulkörper darstellen.

Ein derart modular aufgebauter Ventilträger ist zweckmäßigerweise quer zur Richtung der Hauptachse von zumindest einigen der an der Grundfläche ausmündenden Fluidkanälen durchsetzt, wobei diese Fluidkanäle zu einer der Grundfläche entgegengesetzten Montagefläche des Ventilträgers ausmünden, wo sie mit den dort montierten Ventileinheiten kommunizieren. Hier kann dann der Ventilträger beispielsweise eine Art fluidische Multipol-Anschlusseinrichtung bilden, der lediglich eine Verlängerung der Ventilkanäle der Ventileinheiten realisiert, wobei es möglich ist, die Ventileinheiten zu montieren und zu demontieren, ohne an der Grundfläche an den Ventilträger angeschlossene Fluidleitungen entfernen zu müssen. Es besteht aber auch die Möglichkeit, den Ventilträger zusätzlich als Fluidverteilerbauteil zu verwenden, das von einem oder mehreren Kanälen durchsetzt ist, über die zumindest einige oder vorzugsweise sämtliche Ventileinheiten gemeinsam mit Druckmedium versorgt werden können und über die bei Bedarf auch eine gemeinsame Fluidabfuhr von den Ventileinheiten realisierbar ist.

Sind mehrere Ventileinheiten zu einer modularen Ventilbaugruppe zusammengefasst, die an einem seinerseits modularen Ventilträger montiert sind, kann die Ventilbaugruppe an ihrer dem Ventilträger zugewandten Anschlussfläche in gleicher Weise wie die Grundfläche des Ventilträgers mit einer weiteren Dichtungsaufnahmenut versehen sein. Somit lässt sich die Abdichtung zwischen Ventilträger und Schaltschrankwand einerseits sowie zwischen Ventilbaugruppe und Ventilträger andererseits auf die gleiche Weise realisieren.

Die Dichtungsaufnahmenut kann sich über sämtliche Modulkörperflächen hinweg erstrecken. Enthält die Modulbaugruppe jedoch, insbesondere an einem oder beiden ihrer Endbereiche, auch Modulkörper, an deren Modulkörperflächen keine Fluidkanäle ausmünden, kann die Dichtungsaufnahmenut auch so verlaufen, dass sie sich nicht über diese letztgenannten äußeren Modulkörper hinweg erstreckt.

In der Regel wird sich die Dichtungsaufnahmenut über zwei äußere Modulkörperflächen sowie über eine oder mehrere zwischen diesen beiden äußeren Modulkörperflächen angeordnete innere Modulkörperflächen hinweg erstrecken. Die äußeren Modulkörperflächen sind hierbei zweckmäßigerweise an den äußeren Modulkörpern der Modulbaugruppe vorgesehen, was jedoch nicht zwingend ist. Jedenfalls ist es von Vorteil, wenn die in den äußeren Modulkörperflächen verlaufenden Nut-Längenabschnitte der Dichtungsaufnahmenut jeweils zumindest partiell einen im. Wesentlichen U-förmigen Verlauf aufweisen und so platziert sind, dass die U-Öffnungen einander zugewandt sind. Die inneren Modulkörperflächen sind mit jeweils zwei quer zu der Hauptachse beabstandeten Nut-Längenabschnitten versehen, die die betreffende innere Modulkörperfläche in der Achsrichtung der Hauptachse durchqueren, so dass sie zu den Modulkörperflächen der sich anschließenden Modulkörper ausmünden. Hier ist dann insbesondere eine Anordnung möglich, bei der die Schenkelabschnitte der U-förmigen Nut-Längenabschnitte in jeweils einen Nut-Längenabschnitt des angrenzenden Modulkörpers übergehen.

Nachfolgend wird die Erfindung anhand der beiliegenden Zeichnung näher erläutert. In dieser zeigen:
- Fig. 1: eine bevorzugte Bauform einer erfindungsgemäßen Schaltschrankanordnung, die mit einer vorteilhaften Ausführungsform der erfindungsgemäßen Ventilanordnung ausgestattet ist, das Ganze in einer teils schematischen Explosionsdarstellung, wobei der Schaltschrank nur ausschnittsweise abgebildet ist,
- Fig. 2: eine Vorderansicht der Anordnung aus Fig. 1 mit Blickrichtung gemäß Pfeil II, wobei die mit der Ventilanordnung bestückte Schaltschrankwand strichpunktiert angedeutet ist,
- Fig. 3: einen Schnitt durch die Anordnung aus Fig. 1 und 2 im Zustand der an der Schrankwand des Schaltschrankes montierten Ventilanordnung, und zwar gemäß Schnittlinie III-III aus Fig. 1 und 2,
- Fig. 4: ein weiteres Ausführungsbeispiel der Erfindung, wobei eine mit einer fensterartigen Durchbrechung versehene Schaltschrankwand strichpunktiert angedeutet ist und die zur Montage daran vorgesehene Ventilanordnung sich aus einer Ventilbaugruppe und einem segmentierten Ventilträger zusammensetzt, und
- Fig. 5: eine Explosionsdarstellung der in Fig. 4 ersichtlichen Ventilanordnung.

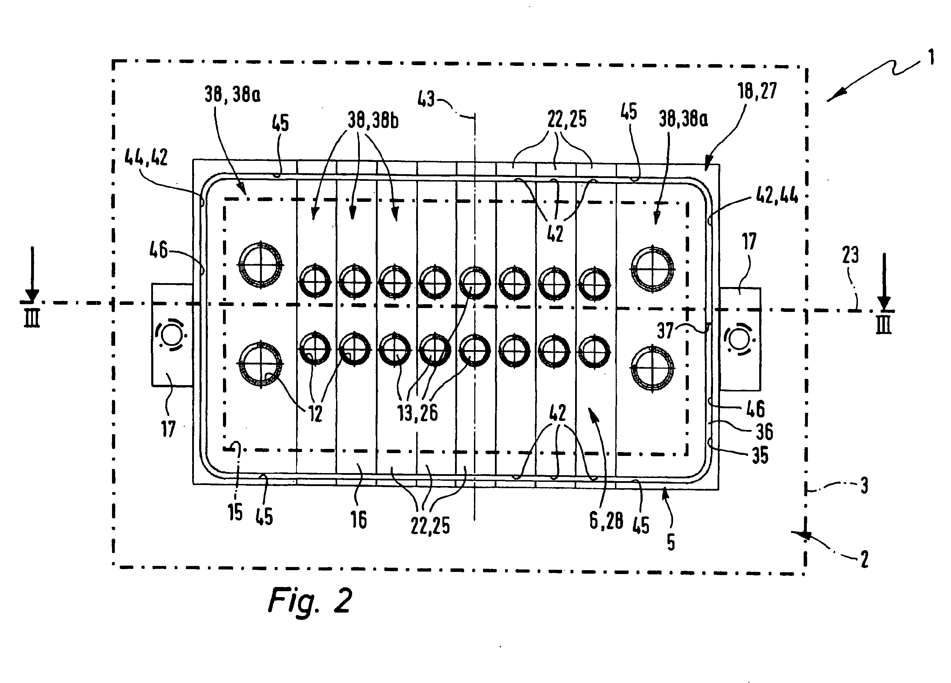

Die aus der Zeichnung ersichtliche, insgesamt mit Bezugsziffer 1 bezeichnete Schaltschrankanordnung umfasst einen nur partiell abgebildeten Schaltschrank 2, von dem in Fig. 2 bis 4 nur ein Ausschnitt seiner Schrankwand 3 ersichtlich ist.

Die Schrankwand 3 umschließt einen Innenraum 4, in dem eine Ventilanordnung 5, vor äußeren Einflüssen geschützt, untergebracht ist.

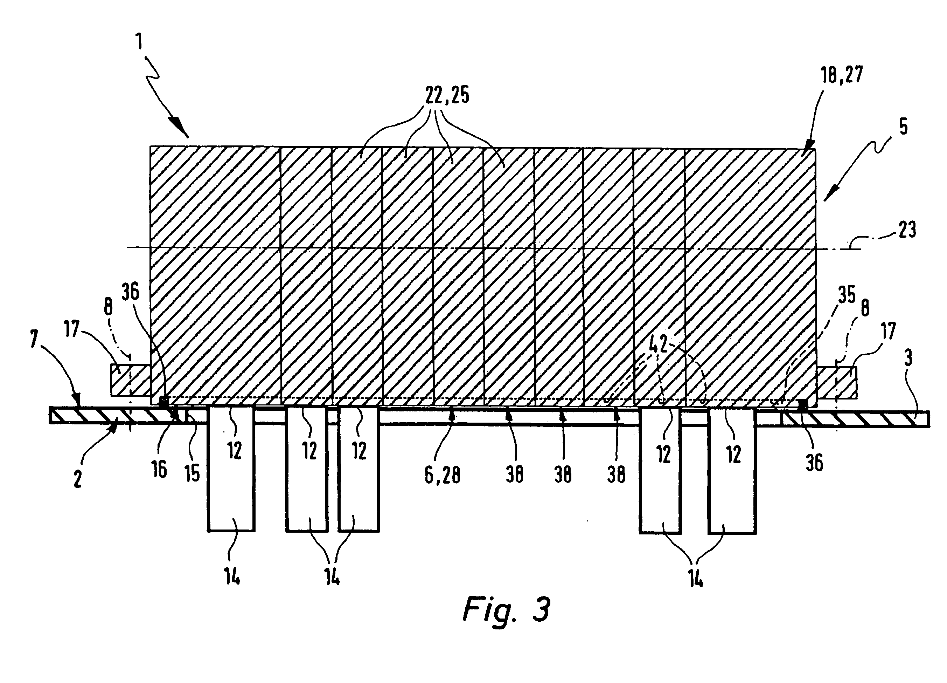

Die Ventilanordnung 5 verfügt über eine im Folgenden als Grundfläche 6 bezeichnete, zweckmäßigerweise zumindest im Wesentlichen ebene Außenfläche. Mit dieser Grundfläche 6 voraus ist die Ventilanordnung 5 an die Innenfläche 7 der Schrankwand 3 ansetzbar, um anschließend durch Befestigungsmittel 8 lösbar an der Schrankwand 3 fixiert zu werden. Die Fig. 3 zeigt einen Schnitt durch den lösbar befestigten Zustand.

Der Schaltschrank 2 enthält eine nicht weiter ersichtliche Türe, durch die hindurch der Innenraum 4 für die erforderlichen Installationsmaßnahmen zugänglich ist.

An der Grundfläche 6 befinden sich zahlreiche Kanalmündungen 12 von im Inneren der Ventilanordnung 5 verlaufenden Fluidkanälen 13. Die Kanalmündungen 12 sind mit nicht näher abgebildeten Befestigungsmitteln ausgestattet, die ein lösbares Anschließen von Fluidleitungen 14 ermöglichen, die zu nicht weiter abgebildeten externen Einrichtungen führen. Solche externen Einrichtungen sind beispielsweise eine Druckquelle, die das für den Betrieb der Ventilanordnung 5 erforderliche Druckmedium liefert, oder aber Verbraucher, insbesondere fluidbetätigte Antriebe, die durch die Ventilanordnung 5 gesteuert mit Druckmedium beaufschlagbar sind.

Die Schrankwand 3 verfügt über eine fensterartige Durchbrechung 15. Die Ventilanordnung 5 ist derart an der Innenfläche 7 platziert, dass die Kanalmündungen 12 innerhalb der fensterartigen Durchbrechung 15 zu liegen kommen und somit von außerhalb des Schaltschrankes 2 her zugänglich sind. Die Grundfläche 6 hat eine größere Ausdehnung als der Querschnitt der fensterartigen Durchbrechung 15, so dass ein rahmenförmiger Randabschnitt 16 der Grundfläche 6 um die fensterartige Durchbrechung 15 herum an der Innenfläche 7 zur Anlage gelangt und sich daran abstützen kann.

Als Befestigungsmittel 8 zur Fixierung der Ventilanordnung 5 sind beispielsweise Schrauben vorgesehen, die die Schrankwand 3 neben der fensterartigen Durchbrechung 15 durchsetzen und sich an Haltelaschen 17 der Ventilanordnung 5 abstützen. Die Befestigungsmittel 8 sind insbesondere so ausgebildet, dass sich die Ventilanordnung 5 fest mit der Schrankwand 3 verspannen lässt. Die fensterartige Durchbrechung 15 ist durch die innen an der Schrankwand 3 montierte Ventilanordnung 5 komplett abgedeckt.

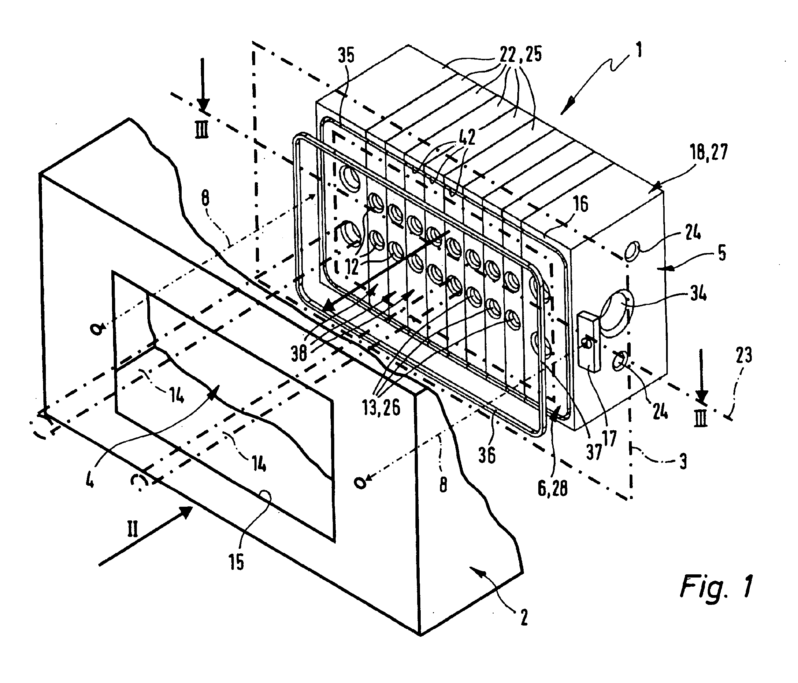

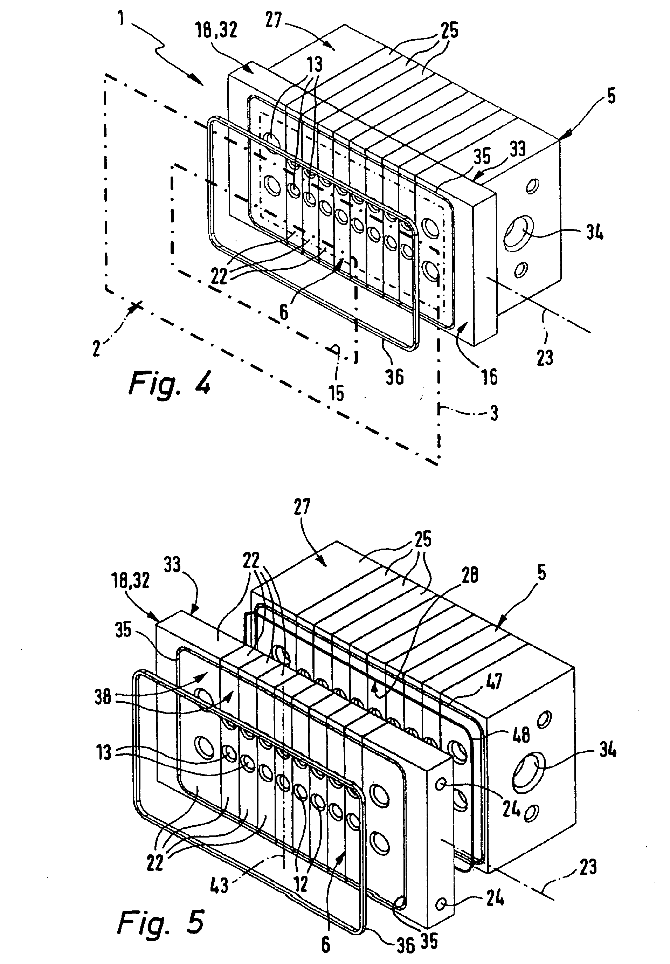

Die Ventilanordnung 5 enthält eine als Modulbaugruppe 18 bezeichnete Baugruppe, die sich aus einer Mehrzahl von Modulkörpern 22 zusammensetzt, die in der Richtung einer Hauptachse 23 aneinander gesetzt sind. Durch nicht weiter abgebildete Zuganker, die durch die Modulbaugruppe 18 in der Achsrichtung der Hauptachse 23 durchziehende Befestigungsbohrungen 24 hindurchgeführt sind, werden die Modulkörper 22 zusammengespannt und zur Bildung der Modulbaugruppe 18 zusammengehalten. Die Modulbaugruppe 18 ist somit ein einheitlich handhabbarer Körper, beispielsweise blockförmig wie beim Ausführungsbeispiel der Fig. 1 bis 3 oder auch plattenförmig wie beim Ausführungsbeispiel der Fig. 4 und 5.

Die Ventilanordnung 5 enthält mehrere zur Steuerung von Fluidströmen dienende Ventileinheiten 25. Die Ventileinheiten 25 enthalten interne Ventilmittel, die aufgrund erhaltener elektrischer Betätigungssignale in gewissen Schaltstellungen positionierbar sind, um Fluidwege wahlweise abzusperren oder freizugeben. Die Ventilmittel sind insbesondere als vorgesteuerte Ventilmittel ausgebildet und enthalten ein zur eigentlichen Steuerung der Fluidströme dienendes Hauptventil, das durch fluidische Signale betätigt wird, die durch mindestens ein zugeordnetes, durch elektrische Betätigungssignale ansteuerbares Vorsteuerventil geliefert werden. Allerdings könnten die Ventilmittel auch zur direkten elektrischen Ansteuerung ausgebildet sein.

Die Ventileinheiten 25 sind zu einer modularen Ventilbaugruppe 27 zusammengefasst. Hierzu sind sie in Achsrichtung der Hauptachse 23 aneinander gereiht und in der schon anhand der Modulbaugruppe 18 geschilderten Art und Weise zu einer selbsttragenden Baueinheit in Gestalt der Ventilbaugruppe 27 zusammengefasst. Die Ventilbaugruppe 27 verfügt über eine zumindest im Wesentlichen ebene Außenfläche, die im Folgenden als Anschlussfläche 28 bezeichnet wird und an der im Inneren der Ventilbaugruppe 27 verlaufende Ventilkanäle 26 ausmünden. Die oben erwähnten Ventilmittel sind in der Lage, den Fluid-durchgang durch zumindest einige der Ventilkanäle 26 zu steuern.

Bei dem Ausführungsbeispiel der Fig. 1 bis 3 ist die Modulbaugruppe 18 unmittelbar von der Ventilbaugruppe 27 gebildet. Mit anderen Worten bildet jede Ventileinheit 25 einen der Modulkörper 22. Die Anschlussfläche 28 und die Grundfläche 6 sind ein und dieselbe Fläche. Mithin sind auch die Fluidkanäle 13 unmittelbar von den Ventilkanälen 26 gebildet.

Dies bedeutet, dass bei montierter Ventilanordnung 5 die mit der Modulbaugruppe 18 identische Ventilbaugruppe 27 unmittelbar an der Innenfläche 7 der Schrankwand 3 montiert ist.

Hiervon abweichend sind beim Ausführungsbeispiel der Fig. 4 und 5 die Modulbaugruppe 18 und die Ventilbaugruppe 27 als separate, eigenständige Baugruppen ausgebildet, die jedoch lösbar miteinander verbindbar sind, um die aus Fig. 4 ersichtliche Baueinheit zu generieren.

Bei dem Ausführungsbeispiel der Fig. 4 und 5 repräsentiert die Modulbaugruppe 18 einen in der Achsrichtung der Hauptachse 3 segmentierten Ventilträger 32, der an seiner der Grundfläche 6 entgegengesetzten Seite eine Montagefläche 33 aufweist, an der die Ventilbaugruppe 27 lösbar montiert ist. Die Fig. 5 zeigt den voneinander getrennten Zustand des Ventilträgers 32 und der Ventilbaugruppe 27.

Die Segmentierung des Ventilträgers 32 ergibt sich aus der Realisierung in Form der aneinander gereihten einzelnen Modulkörper 22, die hier als Ventilträgermodule fungieren.

Beim Ausführungsbeispiel der Fig. 4 und 5 durchsetzen sämtliche der zu der Grundfläche 6 ausmündenden Fluidkanäle 13 den Ventilträger 32 und münden entgegengesetzt zu den Kanalmündungen 12 in entsprechender Verteilung an der Montagefläche 33 aus. Die Verteilung dieser Kanalmündungen entspricht derjenigen der an der Anschlussfläche 28 der Ventilbaugruppe 27 vorhandenen Kanalmündungen der Ventilkanäle 26. Auf diese Weise kommunizieren die Fluidkanäle 13 in einer vom Anwendungsfall abhängenden Zuordnung mit den Ventilkanälen 26, wenn die Ventilbaugruppe 27 am Ventilträger 32 montiert ist.

Sämtliche oder wenigstens einige der Fluidkanäle 13 sind Arbeitskanäle, an die über die Fluidleitungen 14 anzusteuernde Verbraucher anschließbar sind. Es ist aber ohne weiteres möglich, einen oder mehrere der Fluidkanäle 13 so auszubilden, dass über sie eine Einspeisung und/oder Abfuhr des Druckmediums erfolgt, mit dem die Ventilbaugruppe 27 betrieben wird. So könnte mindestens ein Fluidkanal 13 als Speisekanal und mindestens ein weiterer Fluidkanal 13 als Abführkanal ausgebildet sein. Über diese Kanäle können gleichzeitig mehrere oder sämtliche ventileinheiten 25 der Ventilbaugruppe 27 mit Druckmedium versorgt oder entlüftet werden.

Anderseits besteht auch die Möglichkeit, die Fluidversorgung sämtlicher Ventileinheiten 25 über einen gemeinsamen Speisekanal 34 abzuwickeln, der nicht zu der Grundfläche 6 oder der Anschlussfläche 28 ausmündet, sondern an einer anderen Außenfläche der Ventilbaugruppe 27. In gleicher Weise kann auch ein allen Ventileinheiten 25 gemeinsam zugeordneter Fluidabfuhrkanal ausgebildet und angeordnet sein.

Während beim Ausführungsbeispiel der Ventilträger 32 hinsichtlich seiner fluidischen Funktion nur als fluidische Multipol-Anschlusseinrichtung fungiert, bei dem jeder Fluidkanal 13 mit nur einer Ventileinheit 25 in Verbindung steht, ist selbstverständlich auch eine Bauform möglich, bei der mindestens ein Fluidkanal 13 derart in der Modulbaugruppe 18 verläuft, dass er gleichzeitig mit mehreren der angebauten Ventileinheiten 25 in Verbindung steht auf diese Weise eine gemeinsame Fluidversorgung oder Fluidabfuhr stattfinden kann.

Allen Ausführungsbeispielen ist gemeinsam, dass in der Grundfläche 6 der Modulbaugruppe 18 eine die in der Grundfläche 6 angeordneten Kanalmündungen 12 gemeinsam außen umrahmende Dichtungsaufnahmenut 35 ausgebildet ist. Die Dichtungsaufnahmenut 35 erstreckt sich entlang des oben erläuterten Randabschnittes 16, so dass ihre offene Längsseite bei montierter Ventilanordnung der Innenfläche 7 der Schrankwand 3 neben der fensterartigen Durchbrechung 15 gegenüberliegt.

In der Dichtungsaufnahmenut 35 ist ein Dichtungselement 36 angeordnet. In den Fig. 1, 4 und 5 ist das Dichtungselement 36 im noch nicht montierten Zustand, außerhalb der Dichtungsaufnahmenut 35, gezeigt. Das Dichtungselement 36 ist entsprechend des Längsverlaufes der Dichtungsaufnahme 35 ebenfalls rahmenförmig gestaltet und kann eine in sich geschlossene, endlose Form haben, so dass die Kanalmündungen 12 vom montierten Dichtungselement 36 in gleicher Weise umschlossen sind wie von der Dichtungsaufnahmenut 35.

Bei dem Dichtungselement 36 handelt es sich insbesondere um ein eigenständiges Bauteil, das nach dem Zusammenbau der Modulbaugruppe 18 in die Dichtungsaufnahmenut 35 eingesetzt wird. Seine Querschnittsabmessungen sind so auf diejenigen der Dichtungsaufnahmenut 35 abgestimmt, dass es geringfügig über die Grundfläche 6 vorsteht, solange die Ventilanordnung 5 noch nicht mit der Schrankwand 3 verspannt ist. Auf diese Weise wird erreicht, dass bei fest an der Schrankwand 3 montierter Ventilanordnung 5 das Dichtungselement 36 zwischen der Modulbaugruppe 18 und der Schrankwand 3 verpresst wird und dadurch ein zuverlässiger Dichtkontakt erzielt wird.

Das Dichtungselement 36 kann auch, wie aus Fig.1 und 2 ersichtlich, ein vor dem Einlegen in die Dichtungsaufnahmenut 35 endlich langes, strangförmiges Bauteil sein, das biegbar ist und dessen Länge im Wesentlichen derjenigen der Dichtungsaufnahmenut 35 entspricht. Dadurch liegen sich die beiden Endabschnitte des Dichtungselementes 36 im in die Dichtungsaufnahmenut 35 eingelegten Zustand im Bereich einer Trennstelle 37 unmittelbar gegenüber, wobei sie sich auch berühren können. Beim anschließenden Verspannen der Modulbaugruppe 18 mit der Schrankwand 3 wird erreicht, dass die Endabschnitte des Dichtungselementes 36 zusammengedrückt werden und somit auch im Bereich der Trennstelle 37 eine zuverlässige Abdichtung erzielt wird.

Die Realisierung des Dichtungselementes 36 als offenes Strangelement hat den Vorteil, dass es aus Meterware auf beliebige Längen zuschneidbar ist und sich somit ohne Aufwand an die jeweils gegebenen Länge der Dichtungsaufnahmenut 35 anpassen lässt, so dass ein großer Lagerhaltungsaufwand entfällt.

Aufgrund der geschilderten Ausgestaltung erstreckt sich die Dichtungsaufnahmenut 35 in der Achsrichtung der Hauptachse 23 über mehrere Modulkörper 22 hinweg. Hierbei kann eine geringere als die vorhandene Anzahl von Modulkörpern 22 von der Dichtungsaufnahmenut 35 erfasst werden, was insbesondere dann gilt, wenn einer oder mehrere der in der Achsrichtung der Hauptachse 23 außen liegenden Modulkörper 22 keine Kanalmündung 12 aufweist und die fensterartige Durchbrechung 15 folglich einen Querschnitt aufweisen kann, der so klein ist, dass ein oder mehrere äußere Modulkörper 22 nicht in die fensterartige Durchbrechung 15 hineinragen.

Die Grundfläche 6 setzt sich aus mehreren in der Achsrichtung der Hauptachse 23 aneinander gereihten Flächenabschnitten zusammen, die von den einzelnen Modulkörpern 22 gebildet sind und die deshalb im Folgenden als Modulkörperflächen 38 bezeichnet werden. Die Dichtungsaufnahmenut 35 setzt sich aus in den einzelnen Modulkörperflächen 38 ausgebildeten Nut-Längenabschnitten 42 zusammen, die in den Übergangsbereichen zwischen benachbarten Modulkörpern 22 ineinander übergehen.

Man kann sich die Dichtungsaufnahmenut 35 gedanklich auch dadurch entstanden vorstellen, dass eine ursprünglich rahmenförmig geschlossene Nut durch Segmentierung der Grundfläche 6 in die einzelnen Nut-Längenabschnitte 42 unterteilt wird.

Bei allen Ausführungsbeispielen haben die Modulkörper 22 rechtwinkelig zur der Hauptachse 23 eine längliche Gestalt. Die einzelnen Modulkörperflächen 38 sind im Wesentlichen streifenförmig ausgebildet, mit einer Längsachse 43, die parallel zur Grundfläche 6 und zugleich rechtwinkelig zu der Hauptachse 23 verläuft.

Die Dichtungsaufnahmenut 35 verfügt über zwei in der Achsrichtung der Hauptachse 23 entgegengesetzte Endabschnitte 44, die in jeweils einer äußeren Modulkörperfläche 38, 38a angeordnet sind. Die äußeren Modulkörperflächen 38, 38a befinden sich bei den Ausführungsbeispielen an den beiden die Modulbaugruppe 18 diesseits und jenseits abschließenden, außen liegenden Modulkörpern 22.

Die die beiden Endabschnitte 44 bildenden Nut-Längenabschnitte 42 sind insbesondere U-förmig gestaltet, mit einander zugewandten U-Öffnungen. Jeder Endabschnitt 44 verfügt dadurch über zwei rechtwinkelig zur Hauptachse 23 beabstandete Schenkelabschnitte 45, die durch einen den Quersteg des U-bildenden Verbindungsabschnitt 46 miteinander verbunden sind und deren freie Enden der Modulkörperfläche 38 des sich jeweils anschließenden Modulkörpers 22 zugewandt sind.

Die im Folgenden als innere Modulkörperflächen 38b bezeichneten Modulkörperflächen 38 der zwischen den äußeren Modulkörpern 22 liegenden inneren Modulkörper 22 weisen jeweils zwei Nut-Längenabschnitte 42 auf, die sich in Achsrichtung der Hauptachse 23 über die innere Modulkörperfläche 38, 38b hinweg erstrecken. Sie sind derart rechtwinkelig zur der Hauptachse 23 zueinander beabstandet und derart angeordnet, dass zum einen die Nut-Längenabschnitte 42 benachbarter innerer Modulkörperflächen 38, 38b fluchtend ineinander übergehen und zum anderen auch die Schenkelabschnitte 45 mit den Nut-Längenabschnitten 42 der sich jeweils anschließenden inneren Modulkörperflächen 38, 38b fluchten.

Anders ausgedrückt, verlaufen über die inneren Modulkörperflächen 38, 38b jeweils zwei quer zur Hauptachse 23 beabstandete Nut-Längenabschnitte 42 hinweg, die zu beiden in der Achsrichtung der Hauptachse 23 orientierten Seitenrändern der inneren Modulkörperflächen 38, 38b offen sind. Auf diese Weise kann durch Einsetzen oder Entnehmen eines Modulkörpers 22 eine problemlose Verlängerung oder Verkürzung der axialen Länge der Dichtungsaufnahmenut 35 realisiert werden, die lediglich durch eine Anpassung der Länge des Dichtungselementes 36 kompensiert werden muss. Andere Umrüstmaßnahmen sind nicht erforderlich.

Die geschilderten Maßnahmen eignen sich daher optimal zur Abdichtung modular aufgebauter Ventilanordnungen 5, weil keine zusätzlichen einstückigen Plattenelemente als Dichtungsträger erforderlich sind, die man zur Anpassung an unterschiedliche Abmessungen austauschen müsste.

Bei den Ausführungsbeispielen hat die Dichtungsaufnahmenut 35 bei Blick auf die Grundfläche 6 einen rechteckigen Verlauf, insbesondere mit abgerundeten Eckbereichen. Hiervon abweichend sind aber auch andere Längsverläufe möglich, auch mit Ein- und/oder Ausbuchtungen und auch mit innerhalb der einzelnen Modulkörperflächen 38 nicht geradlinigem Verlauf. Beispielsweise könnte der von der Dichtungsaufnahmenut 35 umschlossene Umriss im Bereich der beiden außen liegenden Modulkörper 22 quer zur Hauptachse 23 eine größere Breite aufweisen als im Bereich der dazwischen liegenden Modulkörper 22.

Vorteilhaft ist es jedenfalls, wenn die Grundfläche 6 zumindest in dem mit der Dichtungsaufnahmenut 35 ausgestatteten Abschnitt 16 in einer Ebene verläuft, so dass sich auch die Dichtungsaufnahmenut 35 und das darin zu platzierende Dichtungselement 36 in einer einzigen Ebene erstrecken kann. In denjenigen Bereichen der Modulbaugruppe 18, die bei montierter Ventilanordnung 5 innerhalb der fensterartigen Durchbrechung 15 liegen, kann die Grundfläche 6 bei Bedarf auch uneben ausgebildet sein und insbesondere über Vorsprünge verfügen. Auch ist es unproblematisch, wenn aus den Kanalmündungen 12 herausragende Anschlussmittel vorhanden sind, die eine leichte Steckverbindung der Fluidleitungen 14 ermöglichen. Bei dem Ausführungsbeispiel der Fig. 1 bis 3 bezieht sich die bisherige Beschreibung der Dichtungsaufnahmenut 35 auf die Anordnung an der Ventilbaugruppe 27. Bei dem Ausführungsbeispiel der Fig. 4 und 5 bezieht sich die Beschreibung auf den modular aufgebauten Ventilträger 32. Wie man jedoch der Fig. 5 entnehmen kann, ist es in vorteilhafter Weise möglich, den Ventilträger 32 mit einer Ventilbaugruppe 27 zu bestücken, wobei auch zwischen diesen beiden Komponenten 32, 27 eine Abdichtung vergleichbar derjenigen zwischen der Ventilbaugruppe 27 und der Schrankwand 3 beim Ausführungsbeispiel der Fig. 1 bis 3 stattfindet. So erkennt man in Fig. 5 eine in der Anschlussfläche 28 ausgebildete weitere Dichtungsaufnahmenut 47, die sämtliche Kanalmündungen der Ventilkanäle 26 umrahmt und in die ein weiteres Dichtungselement 48 eingelegt ist, das zur Abdichtung gegenüber der Montagefläche 33 vorgesehen ist. Aufbau und Anordnung der weiteren Dichtungsaufnahmenut 47 und des weiteren Dichtungselementes 48 entsprechen demjenigen bzw. derjenigen der Dichtungsaufnahmenut 35 und des Dichtungselementes 36 beim Ausführungsbeispiel der Fig. 1 bis 3.

## Patentansprüche

1. Ventilanordnung, mit mehreren zur Steuerung von Fluidströmen dienenden Ventileinheiten (25) und mit einer sich aus mehreren in Richtung einer Hauptachse (23) aneinander gesetzten Modulkörpern (22) zusammensetzenden Modulbaugruppe (18), die außen eine sich aus Modulkörperflächen (38) der nebeneinander liegenden Modulkörper (22) zusammensetzende Grundfläche (6) aufweist, an der mehrere in der Modulbaugruppe (18) verlaufende, zum Anschließen von Fluidleitungen (14) vorgesehene Fluidkanäle (13) ausmünden, **dadurch gekennzeichnet, dass** in der Grundfläche (6) eine die dortigen Kanalmündungen (12) der Fluidkanäle (13) umrahmende, zur Aufnahme eines Dichtungselementes (36) dienende Dichtungsaufnahmenut (35) ausgebildet ist, die sich über mehrere Modulkörper (22) hinweg erstreckt, wobei sie sich aus ineinander übergehenden, in aneinander angrenzenden Modulkörperflächen (38) ausgebildeten Nut-Längenabschnitten (42) zusammensetzt.

2. Ventilanordnung nach Anspruch 1, **dadurch gekennzeichnet, dass** sie ein von der Dichtungsaufnahmenut (35) aufgenommenes Dichtungselement (36) aufweist.

3. Ventilanordnung nach Anspruch 1 oder 2, **dadurch gekennzeichnet, dass** sie ein eigenständiges Dichtungselement (36) aufweist, das in die Dichtungsaufnahmenut (35) eingelegt ist.

4. Ventilanordnung nach Anspruch 3, **dadurch gekennzeichnet, dass** das Dichtungselement (36) ein endlich langes, strangförmiges, auf die gewünschte Länge zugeschnittenes Dichtungselement (36) ist.

5. Ventilanordnung nach einem der Ansprüche 1 bis 4, **dadurch gekennzeichnet, dass** die Modulkörper (22) zumindest teilweise unmittelbar von den ventileinheiten (25) gebildet sind.

6. Ventilanordnung nach einem der Ansprüche 1 bis 5, **dadurch gekennzeichnet, dass** die Modulbaugruppe (18) von einer Ventilbaugruppe (27) gebildet ist, die mehrere in Richtung der Hauptachse (23) aneinander gesetzte Ventileinheiten (25) aufweist, die die Modulkörper (22) bilden.

7. Ventilanordnung nach einem der Ansprüche 1 bis 4, **dadurch gekennzeichnet, dass** die Modulbaugruppe (18) einen in Richtung der Hauptachse (23) segmentierten Ventilträger (32) bildet und an ihrer der Grundfläche (6) entgegengesetzten Seite eine Montagefläche (33) aufweist, an der die ventileinheiten (25) montiert sind.

8. Ventilanordnung nach Anspruch 7, **dadurch gekennzeichnet, dass** von den zu der Grundfläche (6) ausmündenden Fluidkanälen (13) der Modulbaugruppe (18) zumindest einige auch zur der Montagefläche (33) ausmünden und dort mit in den daran montierten Ventileinheiten (25) ausgebildeten ventilkanälen (26) kommunizieren.

9. Ventilanordnung nach Anspruch 8, **dadurch gekennzeichnet, dass** die Ventileinheiten (25) in einer Ventilbaugruppe (27) zusammengefasst sind, in der sie in der Richtung der Hauptachse (23) aneinander gesetzt sind, wobei die Ventilbaugruppe (27) eine sich aus Außenflächen der nebeneinander liegenden Ventileinheiten (25) zusammensetzende Anschlussfläche (28) aufweist, an der mehrere in den Ventileinheiten (25) verlaufende Ventilkanäle (26) ausmünden, die mit den an der Montagefläche (33) der Modulbaugruppe (18) ausmündenden Fluidkanä-len (13) in Verbindung stehen.

10. Ventilanordnung nach Anspruch 9, **dadurch gekennzeichnet, dass** in der Anschlussfläche (28) eine die dortigen Kanalmündungen der Ventilkanäle (26) umrahmende weitere Dichtungsaufnahmenut (47) ausgebildet ist, die sich über mehrere Ventileinheiten (25) hinweg erstreckt, wobei sie sich aus ineinander übergehenden, in aneinander angrenzenden Ventileinheiten (25) ausgebildeten Nut-Längenabschnitten (42) zusammensetzt.

11. Ventilanordnung nach einem der Ansprüche 1 bis 10, **dadurch gekennzeichnet, dass** sie ein eigenständiges Dichtungselement (48) aufweist, das in die weitere Dichtungsaufnahmenut (47) eingelegt ist.

12. Ventilanordnung nach einem der Ansprüche 1 bis 11, **dadurch gekennzeichnet, dass** sich die Dichtungsaufnahmenut (35) über sämtliche Modulkörperflächen (38) hinweg erstreckt.

13. Ventilanordnung nach einem der Ansprüche 1 bis 12, **dadurch gekennzeichnet, dass** sich die Dichtungsaufnahmenut (35) in einem in einer Ebene verlaufenden, die Kanalmündungen (12) umrahmenden Randabschnitt (16) der Grundfläche (6) erstreckt.

14. Ventilanordnung nach einem der Ansprüche 1 bis 13, **dadurch gekennzeichnet, dass** sich die Dichtungsaufnahmenut (35) in zwei äußeren Modulkörperflächen (38, 38a,) und mindestens einer zwischen den zwei äußeren Modulkörperflächen (38, 38a) angeordneten inneren Modulkörperfläche (38, 38b) erstreckt, wobei die mindestens eine innere Modulkörperfläche (38, 38b) von zwei quer zur der Hauptachse (23) beabstandeten Nut-Längenabschnitten (42) durchquert ist und wobei die in den äußeren Modulkörperflächen (38, 38a) ausgebildeten Nut-Längenabschnitte (42) jeweils zumindest partiell einen im Wesentlichen U-förmigen Verlauf aufweisen.

15. Schaltschrankanordnung, mit einem Schaltschrank (2), dessen Schrankwand (3) eine fensterartige Durchbrechung (15) aufweist, und mit mindestens einer gemäß einem der Ansprüche 1 bis 14 ausgebildeten Ventilanordnung (5), die mit ihrer Grundfläche (6) voraus derart an der Innenfläche (7) der Schrankwand (3) montiert ist, dass die Dichtungsaufnahmenut (35) die fensterartige Durchbrechung (15) umschließt, und mit einem in der Dichtungsaufnahmenut (35) angeordneten Dichtungselement (36), das um die fensterartige Durchbrechung (15) herum an der Innenfläche (7) der Schrankwand (3) dichtend anliegt.

## Claims

1. Valve assembly with several valve units (25) for the control of fluid flows, and with a module assembly group (18) comprising several module bodies (22) placed side-by-side along a main axis (23) and with an outside base surface (6) comprised of module body surfaces (38) of adjacent module bodies (22) to which lead several fluid passages (13) running in the module assembly group (18) and provided for the connection of fluid lines (14), **characterised in that** there is formed in the base surface (6) a seal locating slot (35) serving to accommodate a seal element (36) and framing the passage orifices (12) of the fluid passages (13) at that point, and extending over several module bodies (22), wherein it is comprised of slot length sections (42) merging into one another and formed in adjacent module body surfaces (38).

2. Valve assembly according to claim 1, **characterised in that** it has a seal element (36) located in the seal locating slot (35).

3. Valve assembly according to claim 1 or 2, **characterised in that** it has a separate seal element (36) which is inserted in the seal locating slot (35).

4. Valve assembly according to claim 3, **characterised in that** the seal element (36) is a strand-like seal element (36) of finite length, cut to the desired length.

5. Valve assembly according to any of claims 1 to 4, **characterised in that** the module bodies (22) are formed directly by the valve units (25), at least in part.

6. Valve assembly according to any of claims 1 to 5, **characterised in that** the module assembly group (18) is formed by a valve assembly group (27) which has several valve units (25) placed side-by-side along a main axis (23) and forming the module bodies (22).

7. Valve assembly according to any of claims 1 to 4, **characterised in that** the module assembly group (18) forms a valve carrier (32) segmented in the direction of the main axis (23), and with a mounting surface (33) on which the valve units (25) are mounted on that side of it lying opposite the base surface (6).

8. Valve assembly according to claim 7 **characterised in that**, of the fluid passages (13) of the module assembly unit (18) which open out at the base surface (6), at least some also open out at the mounting surface (33), where they communicate with valve passages (26) formed in the valve units (25) mounted on it.

9. Valve assembly according to claim 8, **characterised in that** the valve units (25) are assembled into a valve assembly group (27), in which they are placed side-by-side along the main axis (23), while the valve assembly group (27) has a connection face (28), comprised of outer surfaces of the adjacent valve units (25), at which several valve passages (26) running in the valve units (25) open out and are connected to fluid passages (13) opening out at the mounting surface (33) of the module assembly group (18).

10. Valve assembly according to claim 9, **characterised in that** there is formed in the connection face (28) a further seal locating slot (47) framing the passage orifices of the valve passages (26) which are present there, and which extends over several valve units (25), wherein it is comprised of slot length sections (42) merging into one another and formed in adjacent valve units (25).

11. Valve assembly according to any of claims 1 to 10, **characterised in that** it has a separate seal element (48), which is inserted in the additional seal locating slot (47).

12. Valve assembly according to any of claims 1 to 11, **characterised in that** the seal locating slot (35) extends over all module body surfaces (38).

13. Valve assembly according to any of claims 1 to 12, **characterised in that** the seal locating slot (35) extends in an edge section (16) of the base surface (6) framing the passage orifices (12) and running in one plane.

14. Valve assembly according to any of claims 1 to 13, **characterised in that** the seal locating slot (35) extends in two outer module body surfaces (38, 38a) and at least one inner module body surface (38, 38b) located between the two outer module body surfaces (38, 38a), wherein two slot length sections (42) spaced apart at right-angles to the main axis (23) pass through the at least one inner module body surface (38, 38b), and wherein each of the slot length sections (42) formed in the outer module body surfaces (38, 38a) has at least in part a substantially U-shaped course.

15. Control cabinet assembly with a control cabinet (2), the cabinet wall (3) of which has a window-like opening (15), and with at least one valve assembly (5) in accordance with any of claims 1 to 14 which is mounted on the inner surface (7) of the cabinet wall (3), with its base surface (6) leading, in such a way that the seal locating slot (35) encompasses the window-like opening (15), and with a seal element (36) located in the seal locating slot (35) and fitting up tightly against the inner surface (7) of the cabinet wall (3) around the window-like opening (15).

## Revendications

1. Ensemble de vanne comportant plusieurs unités de vanne (25) servant à la commande de courants fluidiques et un bloc modulaire (18) se composant de plusieurs corps modulaires (22) placés les uns contres les autres en direction d'un axe principal (23), le bloc modulaire présentant à l'extérieur une surface de base (6) se composant de surfaces (38) de corps modulaires (22) se trouvant les unes à côté des autres, surface de base sur laquelle débouchent plusieurs canaux fluidiques (13) s'étendant dans le bloc modulaire (18), et prévus pour le raccordement de conduites fluidiques (14), **caractérisé en ce qu'**une rainure de réception de garniture (35), servant à la réception d'un élément de garniture (36), et encadrant les embouchures de canaux qui s'y trouvent (12) des canaux fluidiques (13), est réalisée dans la surface de base (6), laquelle rainure s'étend sur plusieurs corps modulaires (22), sachant qu'elle se compose de sections longitudinales de rainure (42) passant les unes dans les autres, et réalisées dans des surfaces de corps modulaire (38) adjacentes.

2. Ensemble de vanne selon la revendication 1, **caractérisé en ce qu'**il présente un élément de garniture (36) reçu par la rainure de réception de garniture (35).

3. Ensemble de vanne selon la revendication 1 ou 2, **caractérisé en ce qu'**il présente un élément de garniture (36) autonome introduit dans la rainure de réception de garniture (35).

4. Ensemble de vanne selon la revendication 3, **caractérisé en ce que** l'élément de garniture (36) est un élément de garniture (36) long en continu, en forme de barre, découpé à la longueur souhaitée.

5. Ensemble de vanne selon l'une quelconque des revendications 1 à 4, **caractérisé en ce que** les corps modulaires (22) sont formés au moins en partie directement par les unités de vanne (25).

6. Ensemble de vanne selon l'une quelconque des revendications 1 à 5 **caractérisé en ce que** le bloc modulaire (18) est formé par un bloc de vanne (27) présentant plusieurs unités de vanne (25) placées les unes sur les autres en direction de l'axe principal (23) et formant les corps modulaires (22).

7. Ensemble de vanne selon l'une quelconque des revendications 1 à 4, **caractérisé en ce que** le bloc modulaire (18) forme un porte-vanne (32) segmenté en direction de l'axe principal (23) et présente, sur son côté opposé à la surface de base (6), une surface de montage (33), sur laquelle sont montées les unités de vanne (25).

8. Ensemble de vanne selon la revendication 7, **caractérisé en ce qu'**au moins quelques-uns des canaux fluidiques (13) du bloc modulaire (18) débouchant vers la surface de base (6) débouchent aussi vers la surface de montage (33) et y communiquent avec des canaux de vanne (26) réalisés dans les unités de vanne (25) montées dessus.

9. Ensemble de vanne selon la revendication 8, **caractérisé en ce que** les unités de vanne (25) sont réunies dans un bloc de vanne (27), dans lequel elles sont placées les unes sur les autres en direction de l'axe principal (23), sachant que le bloc de vanne (27) présente une surface de raccordement (28) se composant de surfaces extérieures des unités de vanne (25) se trouvant les unes à côté des autres, surface de raccordement sur laquelle débouchent plusieurs canaux de vanne (26) s'étendant dans les unités de vanne (25) et en liaison avec les canaux fluidiques (13) débouchant sur la surface de montage (33) du bloc modulaire (18).

10. Ensemble de vanne selon la revendication 9, **caractérisé en ce qu'**une rainure de réception de garniture (47) supplémentaire encadrant les embouchures de canal qui s'y trouvent des canaux de vanne (26) est réalisée dans la surface de raccordement (28), laquelle rainure supplémentaire s'étend sur plusieurs unités de vanne (25), sachant qu'elle se compose de sections longitudinales de rainure (42) passant les unes dans les autres et réalisées dans des unités de vanne (25) adjacentes.

11. Ensemble de vanne selon l'une quelconque des revendications 1 à 10, **caractérisé en ce qu'**il présente un élément de garniture autonome (48) introduit dans la rainure de réception de garniture (47) supplémentaire.

12. Ensemble de vanne selon l'une quelconque des revendications 1 à 11, **caractérisé en ce que** la rainure de réception de garniture (35) s'étend sur toutes les surfaces de corps modulaire (38).

13. Ensemble de vanne selon l'une quelconque des revendications 1 à 12, **caractérisé en ce que** la rainure de réception de garniture (35) s'étend dans une section de bord (16) encadrant les embouchures de canal (12) s'étendant dans un plan de la surface de base (6).

14. Ensemble de vanne selon l'une quelconque des revendications 1 à 13, **caractérisé en ce que** la rainure de réception de garniture (35) s'étend dans deux surfaces de corps modulaire (38, 38a) extérieures et au moins une surface de corps modulaire (38, 38b) intérieure disposée entre les deux surfaces de corps modulaire (38, 38a) extérieures, sachant qu'au moins une surface de corps modulaire (38, 38b) intérieure est traversée par deux sections longitudinales de rainure (42) espacées transversalement à l'axe principal (23) et sachant que les sections longitudinales de rainure (42) réalisées dans les surfaces de corps modulaire (38, 38a) extérieures présentent chacune au moins en partie une extension développement sensiblement en U.

15. Système d'armoire de distribution comprenant une armoire de distribution (2), dont la paroi (3) présente une perforation (15) de type fenêtre, et au moins un ensemble de vanne (5) réalisé selon l'une quelconque des revendications 1 à 14 qui est monté avec sa surface de base (6) en avant sur la surface intérieure (7) de la paroi d'armoire (3) de telle manière que la rainure de réception de garniture (35) entoure la perforation (15) de type fenêtre, et un élément de garniture (36) disposé dans la rainure de réception de garniture (35) et reposant de manière étanche autour de la perforation de type fenêtre (15) sur la surface intérieure (7) de la paroi d'armoire (3).
